# EUROPÄISCHE PATENTSCHRIFT

(11) **EP 0 797 733 B1**
(45) Veröffentlichungstag und Bekanntmachung des Hinweises auf die Patenterteilung: **04.10.2001**
(21) Anmeldenummer: 95942676.8
(22) Anmeldetag: 15.12.1995
(51) Int. Cl.: F04B 9/04, F04B 17/03

(54) **KOLBENPUMPE**
PISTON PUMP
POMPE A PISTON

(30) Priorität: 15.12.1994 DE 4444646
(43) Veröffentlichungstag der Anmeldung: 01.10.1997
(73) Patentinhaber: Continental Teves AG & Co. oHG, 60488 Frankfurt (DE)
(72) Erfinder: VOLZ, Peter, D-64291 Darmstadt (DE); REINARTZ, Hans-Dieter, D-60439 Frankfurt am Main (DE); DINKEL, Dieter, D-65817 Eppstein (DE)
(86) Internationale Anmeldenummer: EP9504977
(87) Internationale Veröffentlichungsnummer: WO9618816

(56) Entgegenhaltungen:
- EP-A- 0 354 725
- EP-A- 0 414 933
- EP-A- 0 436 564
- GB-A- 2 263 318
- PATENT ABSTRACTS OF JAPAN vol. 018 no. 360 (M-1634) ,7.Juli 1994 & JP,A,06 093964 (AISIN SEIKI CO LTD) 5.April 1994,

## Beschreibung

Die Erfindung bezieht sich auf eine Kolbenpumpe gemäß dem Oberbegriff des Anspruchs 1.

Eine derartige Pumpe ist zum Beispiel in der EP 436 564 B1 dargestellt. Zwischen dem Exzenter und dem Pumpenkolben ist ein Lager, bestehend aus einem Lagerring und einzelnen Lagernadeln, vorgesehen. Um ein Verschieben sowohl der Lagernadeln als auch des Lagerrings in axialer Richtung zu verhindern, sind seitlich des Exzenters zwei Kragen vorgesehen, an denen die Stirnflächen der Nadeln und des Ringes zur Anlage gelangen. Ferner ist aus der JP-A-06 093964 eine Kolbenpumpe bekannt geworden, bei der die Welle in einem Lager läuft und zwischen dem Innenring dieses Lagers und dem Pumpenlager des Exzenters befindet sich ein separater Ring. Derartige Anordnungen sind schwierig zu montieren.

Aufgabe der vorliegenden Erfindung ist, die Montage der Kolbenpumpe zu erleichtern.

Es wird daher vorgeschlagen, daß die Lageranordnung so ausgeführt wird, daß zumindest eine Stirnfläche des Lagerrings an dem Innenring eines Lagers für die Welle abgestützt werden kann.

Weitere Ausbildungen der Erfindung sind in den Unteransprüchen beschrieben. Dabei ist weiterhin wichtig, daß die axiale Beweglichkeit der Lagernadeln nicht durch Kragen am Lagerring hervorgerufen wird, sondern dadurch, daß die Mantelfläche des Exzenters gegenüber der Mantelfläche der Welle nach innen versetzt ist, so daß die so gebildeten stufigen Übergänge zwischen der Welle und dem Exzenter als axiale Anschlagflächen für die Lagernadeln dienen.

Vorzugsweise wird die Welle, an der der Exzenter ausgebildet ist, beidseitig des Exzenters durch Lager unterstützt. Die Welle selbst, die als Verlängerung einer Ankerwelle eines Elektromotors ausgebildet ist, kann freifliegend ausgebildet werden, das heißt, daß das ankerseitige Ende der Welle nicht weiter durch ein Lager abgestützt ist.

Diese Anordnung hat aber den Nachteil, daß der Elektromotor zum Antrieb der Kolbenpumpe nicht unabhängig von der Pumpe, das heißt vor dem Zusammenbau mit der Pumpe, auf seine Funktionstüchtigkeit überprüft werden kann.

Es wird daher vorgeschlagen, daß in dem Elektromotorgehäuse des Elektromotors zum Antrieb der Kolbenpumpe ein Hilfslager vorgesehen ist, das am ankerseitigen Ende der Welle ausgebildet ist. Die einfachste Ausführung eines derartigen Hilfslagers besteht aus einem Gleitlagerring, der aus einem Material hergestellt wird, das einer starken Abnutzung unterliegt. Vor der Montage des Elektromotors mit der Pumpe wird die Welle somit vom Hilfslager und einem Hauptlager getragen. Diese Lagerung reicht aus, um den Elektromotor auf seine Funktionstüchtigkeit zu überprüfen. Nach dem Zusammenbau von Elektromotor und Pumpe befindet sich das Hauptlager im Pumpengehäuse und kann daher die erheblich größeren Kräfte die beim Betrieb der Pumpe auftreten, abstützen und in das Pumpengehäuse einleiten. Das Hilfslager wird in der Anfangsphase des Betriebs durch die auftretenden Lagerkräfte zerstört, da, wie schon erläutert das Material einem starken Abrieb unterliegt. Im Endeffekt löst sich die Wirkung des Hilfslagers auf, so daß eine freifliegende Welle vorliegt.

Die Erfindung wird durch zwei Figuren dargestellt, dabei zeigt die
- Figur 1: den Querschnitt durch ein Motor-Pumpenaggregat und
- Figur 2: eine alternative Ausführung zur Lagerung der Motorwelle im Motorgehäuse.

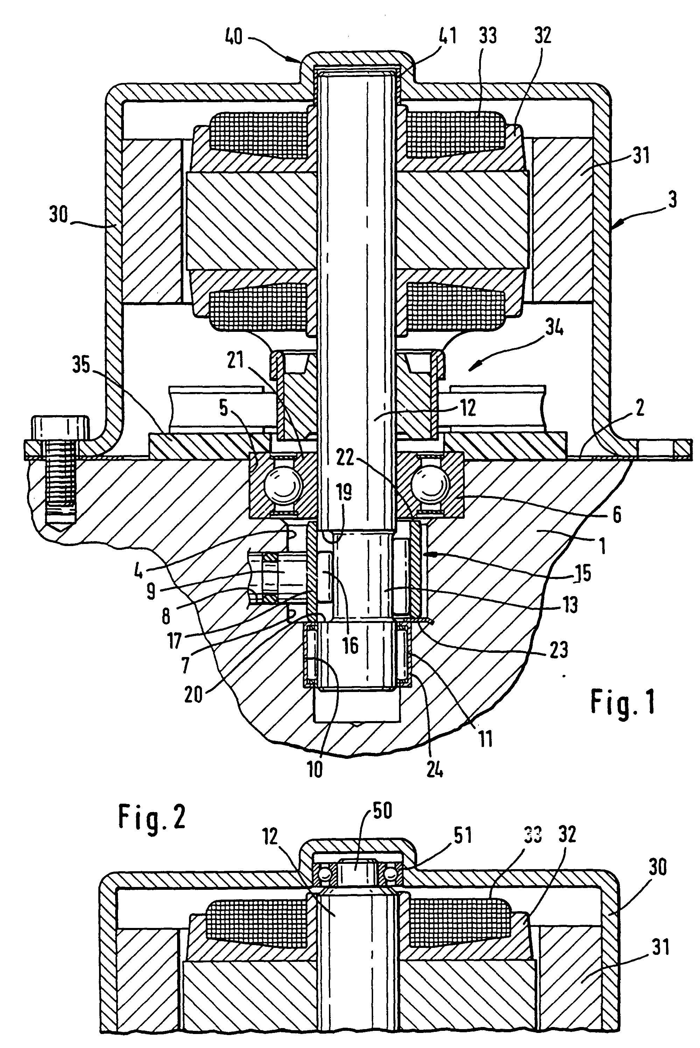

Zunächst wird auf die Figur 1 Bezug genommen.

In der Figur 1 ist die Pumpe nicht vollständig dargestellt, sondern nur der Bereich, der den Exzenter wiedergibt. Die Pumpe ist einem Gehäuse 1 untergebracht, das über eine Flanschfläche 2 verfügt. An diese Fläche 2 wird der Elektromotor 3 angeschraubt, wobei das Pumpengehäuse 1 als Lagerschild dient.

Das Pumpengehäuse 1 weist eine mehrfach gestufte Sackbohrung 4 auf, die in die Flanschfläche 2 einmündet. Ein erster Bereich 5 der Sackbohrung, der unmittelbar an die Flanschfläche 2 anschließt, dient zur Aufnahme eines Hauptlagers 6.

An den ersten Bereich 5 schließt sich ein zweiter Bereich 7 an, in der senkrecht Bohrungen 8 einmünden, in denen die Pumpenkolben 9 geführt sind. Der dritte Bereich 10 der Stufenbohrung 4 dient der Aufnahme eines Nebenlagers 11.

Das Hauptlager 6 und das Nebenlager 11 tragen eine Welle 12, die als verlängerte Ankerwelle des Elektromotors 3 ausgebildet ist. In Höhe des zweiten Bereichs 7 weist die Welle 12 einen Exzenter 13 auf, dessen Durchmesser kleiner ist als die der Welle 12 und der so zur Welle 12 angeordnet ist, daß die Mantelfläche des Exzenters 13 gegenüber der Mantelfläche der Welle 12 über den gesamten Umfang radial nach innen versetzt ist. Der Exzenter 13 ist somit als Vertiefung gegenüber der Welle 12 ausgebildet.

Zwischen dem Pumpenkolben 9 und dem Exzenter 13 ist ein Pumpenlager 15 vorgesehen. Dieses besteht aus mehreren Walzen oder Nadeln 16, die unmittelbar auf der Mantelfläche des Exzenters 13 abrollen. Die Nadeln 16 werden von einem Lagerring 17 umfaßt, wobei der Innendurchmesser des Lagerrings 17 der Summe aus dem Durchmesser des Exzenters 13 und dem zweifachen des Durchmessers einer Nadel 16 entspricht.

Da außerdem der maximale Versatz der Mantelflächen von Welle und Exzenter nicht größer ist als der Durchmesser einer Nadel 16, hält die innere Mantelfläche des Lagerrings 17 stets einen Abstand zur äußeren Mantelfläche der Welle 12 ein.

Der Lagerring 17 weist keine Einkragungen nach innen auf, die ein Wandern der Nadeln 16 in axialer Richtung verhindern, vielmehr ragt zu beiden Seiten des Exzenters 13 die Welle 12 in radialer Richtung über die Mantelfläche des Exzenter hinaus, so daß durch den stufigen Übergang zwischen dem Exzenter 13 und der Welle 12 Anschlagflächen 19 bzw. 20 für die Nadeln 16 gebildet werden.

Um ein Wandern des Lagerrings 17 in axialer Richtung zu verhindern, sind ebenfalls Anschlagflächen vorgesehen.

Diese werden in der einen Richtung gebildet durch den inneren Lagerring 21 des Hauptlagers 6. Dieser sitzt in unmittelbarem Anschluß an den Exzenter 13 auf der Welle 12 auf, so daß die Stirnflächen 22 des Lagerrings 17 in Anlage an den inneren Lagerring 21 gelangen können.

Auf der anderen Seite des Lagerrings 17 dient ein flacher Ring 23 als Anschlagfläche, der in der rechten Bildhälfte dargestellt ist, sich aber über den gesamten Umfang erstreckt, und der an der Stufenfläche zwischen dem zweiten und dritten Bereich der Sackbohrung 4 anliegt. Wird auf diesen Ring verzichtet, so kann sich die Stirnfläche des Lagerrings 17 entweder an die Stufenfläche selbst oder an das nach innen gebogene Ende der Lagerschale 24 des Nebenlagers 11 anlegen.

Wie schon erläutert ist die Welle 12 mit dem Exzenter 13 eine verlängerte Ankerwelle eines Elektromotors 3. Dieser Elektromotor 3 weist ein topfförmiges Gehäuse 30 auf, an dessen inneren Zylinderfläche Dauermagnete 31 befestigt sind. Auf der Welle 12 ist ein Anker 32 angeordnet, dessen Windungen 33 über eine Bürstenkollektoranordnung 34 mit Strom wechselnder Polung versorgt werden. Es handelt sich um den typischen Aufbau eines Gleichstrommotors, der zum Beispiel in Stellorganen in Kraftfahrzeugen eingesetzt wird. Das offene Ende des Topfes 30 wird durch eine Trageplatte 35 verschlossen. Die Trageplatte 35 hält die Bürsten der Bürstenkollektoranordnung 34 sowie über eine Teillänge das Hauptlager 6.

Im Topfboden des Gehäuses 30 ist ein Hilfslager 40 eingesteckt, das das ankerseitige Ende der Welle 12 trägt.

Nach dem Zusammenbau von Elektromotor 3 und Pumpe ist das Hilfslager 40 von untergeordneter Bedeutung, da die Kräfte, die auf die Welle 12 wirken, im wesentlichen vom Hauptlager 6 und vom Nebenlager 11 aufgenommen und in das Pumpengehäuse 1 eingeleitet werden. Das Hilfslager 40 hat vielmehr die Funktion, es zu ermöglichen, den Elektromotor 3 vor dem Zusammenbau mit der Pumpe testen zu können. Vor dem Zusammenbau wird die Welle 12 nämlich vom Hauptlager 6, das teilgefaßt in der Bürstentragplatte 35 sitzt, und dem Hilfslager 40 getragen. Die Halterung des Hauptlagers 6 in der Bürstentragplatte 35 sowie die Ausführung des Hilfslagers 40 müssen so gestaltet sein, daß während eines Probelaufs, bei dem der Motor keine Leistung abgeben muß, die auftretenden Lagerkräfte abgestützt werden können.

Das Hilfslager 40 kann dabei zum Beispiel als Gleitlager ausgebildet werden, wobei ein Gleitring 41, der in einer Vertiefung im Topfboden eingesteckt ist, die Welle 12 umfaßt. Das Material aus dem der Gleitring besteht, kann gezielt so ausgewählt werden, daß es einem starken Abrieb unterliegt. Beim Betrieb des Elektromotors als Antrieb für die Pumpe wird das Hilfslager 40 bzw. der Gleitring 41 schnell zerstört, so daß die Welle 12 eine sogenannte freifliegende Welle bildet, die nur auf dem vom Anker abgewandten Ende durch Lager unterstützt ist.

Eine Alternative zu dem Gleitring gemäß Figur 1 stellt die Ausführung des Hilfslagers gemäß Figur 2 dar. Hier wird das ankerseitige Ende der Welle 12 durch ein Kugellager 51 gehalten, das auf einen Zapfen 50 am Wellenende aufgesetzt ist und in einer Vertiefung am Topfboden liegt.

### Bezugszeichenliste

- 1: Gehäuse
- 2: Flanschfläche
- 3: Elektromotor
- 4: Sackbohrung
- 5: erster Bereich
- 6: Hauptlager
- 7: zweiter Bereich
- 8: Bohrung
- 9: Pumpenkolben
- 10: dritter Bereich
- 11: Nebenlager
- 12: Welle
- 13: Exzenter
- 15: Pumpenlager
- 16: Nadel
- 17: Lagerring
- 19: Anschlagfläche
- 20: Anschlagfläche
- 21: innerer Lagerring
- 22: Stirnfläche
- 23: Ring
- 24: Lagerschale
- 30: Gehäuse
- 31: Dauermagnete
- 32: Anker
- 33: Windung
- 34: Bürstenkollektoranordnung
- 35: Bürstentrageplatte
- 40: Hilfslager
- 41: Gleitring
- 50: Zapfen
- 51: Kugellager

## Patentansprüche

1. Kolbenpumpe mit mindestens einem Pumpenkolben, der an einem an einer Welle ausgebildeten Exzenter abgestützt ist, wobei zwischen Exzenter und Pumpenkolben ein Pumpenlager vorgesehen ist, das aus einem Lagerring sowie Lagernadeln besteht, und mindestens einem weiteren Lager, in dem die Welle läuft, **dadurch gekennzeichnet, daß** das weitere Lager (6) sowie das Pumpenlager (17) derart zueinander angeordnet sind, **daß** die Stirnfläche (22) des Lagerrings (17) des Pumpenlagers (15) am Innenring (21) des weiteren Lagers (6) anlegbar ist.

2. Kolbenpumpe nach Anspruch 1, **dadurch gekennzeichnet, daß** die Mantelfläche des Exzenters (13) gegenüber der Mantelfläche der Welle (12) über den gesamten Umfang der Welle (12) bzw. des Exzenters (13) radial nach innen versetzt ist.

3. Kolbenpumpe nach Anspruch 2, **dadurch gekennzeichnet, daß** der maximale Versatz der Mantelfläche nicht größer ist als der Durchmesser einer Lagernadel (16).

4. Kolbenpumpe nach Anspruch 3, **dadurch gekennzeichnet, daß** die andere Stirnfläche des Lagerrings (17) mittelbar oder unmittelbar an eine Stufe im Pumpengehäuse (1) anlegbar ist.

5. Kolbenpumpe nach Anspruch 1, **dadurch gekennzeichnet, daß** der Lagerring (17) keine Einkragungen nach innen aufweist.

6. Kolbenpumpe nach Anspruch 1, **dadurch gekennzeichnet, daß** der Exzenter (13) auf einer Welle (12) ausgebildet ist, die als Ankerwelle eines die Pumpe antreibenden Elektromotors (3) ausgeführt ist.

7. Kolbenpumpe nach Anspruch 6, **dadurch gekennzeichnet, daß** die Welle (12) am ankerseitigen Ende in einem Hilfslager (40) getragen ist.

8. Kolbenpumpe nach Anspruch 7, **dadurch gekennzeichnet, daß** das Hilfslager (40) aus einem Lagerring (41) aus einem Material mit geringem Abriebswiderstand besteht.

## Claims

1. Piston pump including at least one pump piston which is supported on an eccentric formed on a shaft, wherein a pump bearing comprising a bearing ring and bearing needles is provided between the eccentric and the pump piston, and including at least one further bearing in which the shaft rotates,
**characterized in that** the second bearing (6) and the pump bearing (15) are arranged in relation to each other so that the end surface (22) of the bearing ring (17) of the pump bearing (15) is movable into abutment on the inner ring (21) of the second bearing (6).

2. Piston pump as claimed in claim 1,
**characterized in that** the peripheral surface of the eccentric (13) with respect to the peripheral surface of the shaft (12) is radially inwardly offset over the entire periphery of the shaft (12) or of the eccentric (13).

3. Piston pump as claimed in claim 2,
**characterized in that** the maximum offsetting of the peripheral surface does not exceed the diameter of a bearing needle (16).

4. Piston pump as claimed in claim 3,
**characterized in that** the second end surface of the bearing ring (17) is indirectly or directly movable into abutment on a step in the pump housing (1).

5. Piston pump as claimed in claim 1,
**characterized in that** the bearing ring (17) does not have inwardly directed collars.

6. Piston pump as claimed in claim 1,
**characterized in that** the eccentric (13) is arranged on a shaft (12) which is configured as an armature shaft of an electric motor (3) driving the pump.

7. Piston pump as claimed in claim 6,
**characterized in that** the shaft (12) on its end close to the armature is supported in an auxiliary bearing (40).

8. Piston pump as claimed in claim 7,
**characterized in that** the auxiliary bearing (40) includes a bearing ring (41) made of a material with a low wear resistance.

## Revendications

1. Pompe à piston comportant au moins un piston de pompe articulé sur un excentrique aménagé sur un arbre, un palier de pompe étant prévu entre l'excentrique et le piston de pompe, composé d'une bague de roulement et d'aiguilles de roulement, et comportant au moins un autre palier dans lequel tourne l'arbre, **caractérisée en ce que** l'autre palier (6) ainsi que le palier de pompe (15) sont disposés l'un par rapport à l'autre d'une manière telle que la face frontale (22) de la bague de roulement (17) du palier de pompe (15) puisse venir buter sur la bague intérieure (21) de l'autre palier (6).

2. Pompe à piston selon la revendication 1, **caractérisée en ce que** la surface enveloppante de l'excentrique (13) est décalée radialement vers l'intérieur par rapport à la surface enveloppante de l'arbre (12) sur toute la circonférence de l'arbre (12) ou de l'excentrique (13).

3. Pompe à piston selon la revendication 2, **caractérisée en ce que** le décalage maximal de la surface enveloppante n'est pas supérieur au diamètre d'une aiguille de roulement (16).

4. Pompe à piston selon la revendication 3, **caractérisée en ce que** l'autre face frontale de la bague de roulement (17) peut venir buter directement ou indirectement sur un épaulement du carter de pompe (1).

5. Pompe à piston selon la revendication 1, **caractérisée en ce que** la bague de roulement (17) ne comporte aucune collerette tournée vers l'intérieur.

6. Pompe à piston selon la revendication 1, **caractérisée en ce que** l'excentrique (13) est formé sur un arbre (12) réalisé sous forme d'un arbre d'induit d'un moteur électrique (3) entraînant la pompe.

7. Pompe à piston selon la revendication 6, **caractérisée en ce que** l'arbre (12) est supporté, à l'extrémité du côté induit, par un palier auxiliaire (40).

8. Pompe à piston selon la revendication 7, **caractérisée en ce que** le palier auxiliaire (40) est constitué d'une bague de palier (41) faite en une matière ayant une faible résistance à l'abrasion.
